# EUROPÄISCHE PATENTANMELDUNG

(11) **EP 3 582 349 A1**
(43) Veröffentlichungstag der Anmeldung: **18.12.2019**
(21) Anmeldenummer: 19179033.6
(22) Anmeldetag: 07.06.2019
(51) Int. Cl.: H02G 3/04, C09D 5/18

(54) **KABELSCHUTZFÜHRUNG**

(30) Priorität: 11.06.2018 CH 7462018
(71) Anmelder: Aborra AG, 8103 Unterengstringen (CH)
(72) Erfinder: Bucher, Simon, 4412 Nuglar (CH); Civelek, Resat, 8803 Rüschlikon (CH)
(74) Vertreter: Schneider Feldmann AG Patent- und Markenanwälte

(57) **Zusammenfassung**

Bei einer Vorrichtung umfassend ein metallisches Rohr zur Durchführung mindestens eines Kabels zur Bildung einer Kabelschutzführung, soll eine Vorrichtung zur Bildung einer Kabelschutzführung bereitgestellt werden, welche insbesondere eine besonders gute Brandabschottung gewährleistet, während bei der Installation der Vorrichtung ein möglichst hohes Mass an Flexibilität gegeben ist. Dies wird dadurch erreicht, dass das metallische Rohr mit einer auf die Oberfläche des Rohrs angebrachten Brandschutzbeschichtung versehen ist, so dass die Brandabschottung des Rohrs verbessert wird.

## Beschreibung

### Technisches Gebiet

Die vorliegende Erfindung beschreibt eine Vorrichtung ausgebildet als Kabelschutzführung zur Brandabschottung gemäss Oberbegriff des ersten Patentanspruches.

### Stand der Technik

Bekannt sind beispielsweise so genannte Kabelboxen der Firma Wichmann Brandschutzsysteme GmbH oder der Firma Firentis, welche zur Brandabschottung dienen. Solche Kabelboxen bestehen aus einem Stahlblechgehäuse, das in Öffnungen in Wänden, Böden, Decken und im Unterflur eingebaut wird, um Kabel hindurchzuführen und gegen Feuer und Rauch abzuschotten. Die Kabelbox ist mit Brandschutz-Paketen ausgekleidet, die im Brandfall aufschäumen und den Innenraum verschließen. Nachdem die Kabel durchgeführt wurden, wird die Kabelbox an den Stirnseiten mit speziellen Schaumstopfen und einer dauerelastischen Dichtmasse gegen Rauch abgedichtet. Solche Kabelboxen haben den Nachteil, dass der Einbau dieser Kabelboxen relativ aufwendig ist und üblicherweise in hierzu vorgesehene Öffnungen anzubringen sind, d.h. dessen Installation muss bereits zum Zeitpunkt der Bauplanung berücksichtigt worden sein.

Aus dem Dokument US 1,209,533 ist beispielsweise eine weitere Kabelschutzführung bekannt, welche im Wesentlichen durch ein Metallrohr zur Durchführung elektrischer Kabel gebildet wird. Die hieraus bekannte, als Metallrohr ausgestaltete Kabelschutzführung kann mittels geeigneter Befestigungsmittel an Wänden und Decken auch nach Erstellung eines Gebäudes, d.h. ohne spezielle Vorkehrungen während des Baus, befestigt werden.

Bei der aus dem Dokument US 1,209,533 bekannten Kabelschutzführung ist nachteilig der Installationsaufwand relativ hoch. Im Weiteren ist es ein anhaltendes Bedürfnis, die Brandabschottung von Kabelschutzführungen weiter zu verbessern.

### Darstellung der Erfindung

Die vorliegende Erfindung hat sich zur Aufgabe gestellt, eine Vorrichtung zur Bildung einer Kabelschutzführung bereitzustellen, welche die Nachteile des Standes der Technik überwindet und insbesondere eine besonders gute Brandabschottung gewährleistet, während bei der Installation der Vorrichtung ein möglichst hohes Mass an Flexibilität gegeben ist.

Diese Aufgabe erfüllt eine Vorrichtung Kabelschutzführung mit den Merkmalen des Patentanspruches 1.

Erfindungsgemäss ist das metallische Rohr mit einer auf die Oberfläche des Rohrs angebrachten Brandschutzbeschichtung versehen, so dass die Brandabschottung des Rohrs verbessert wird.

Bekannte Brandschutzbeschichtungen, welche die Eigenschaft eines Dämmschichtbildners besitzen, enthalten einen polyvalenten Alkohol (z.B. Pentaerythritol), eine Stickstoff-Quelle (wie beispielsweise Melamin) und einen Phosphor-Donor (z. B. Ammoniumpolyphosphat). Ammoniumpolyphosphat (APP) zersetzt sich bei Temperaturen über 250 °C zu Phosporsäure. Diese reagiert mit Pentaerythritol zu Phosphatestern, welche sich weiter zu Kohlendioxid und kohlenstoff- sowie phosphorhaltigen Überresten zersetzen. Bei Hitze zersetzt sich das Melamin zu gasförmigem Ammoniak, das zur Expansion der Ammoniumpolyphosphat-Überreste führt. Dabei entsteht ein wärmeisolierender Schaum, der den Stahlträger vom Feuer abschirmt. Mit anderen Wort wird durch die Hitzeeinwirkung eine wärmeisolierende Dämmschicht gebildet.

Alternativ kann die verwendete Brandschutzbeschichtung auf einer Silikonformulierung basieren wie beispielsweise aus der WO 2015/091396 A1 der Firma Sika bekannt. Eine auf Basis einer Silikonformulierung hergestellte, für die erfindungsgemässe Anwendung geeignete Brandschutzbeschichtung ist beispielsweise das Produkt "Sika Pyroplast ST-100" der Firma Sika. Sika Pyroplast ST-100 bildet ebenfalls unter Hitzeeinwirkung eine wärmeisolierende Dämmschicht, welche die Feuerwiderstandsdauer des darunterliegenden Metalls erhöht.

Auch weitere Typen von Brandschutzbeschichtungen, welche sich für die Beschichtung von metallischen Oberflächen eignen, sind denkbar.

Weitere vorteilhafte Ausführungsformen sind in den abhängigen Patentansprüchen angegeben.

Bevorzugt ist das Rohr als metallisches Wellrohr ausgestaltet. Gegenüber der aus Dokument US 1,209,533 bekannten Kabelschutzführung hat die Verwendung eines metallischen Wellrohrs den Vorteil, dass aufgrund der Flexibilität die Installation der erfindungsgemässen Vorrichtung vereinfacht wird. Die Verwendung eines Metallwellrohrs führt zudem gegenüber auf Kunststoff basierenden Wellrohren zu einer verbesserten Gasdichtigkeit.

Im Weiteren ist bevorzugt die Brandschutzbeschichtung als Aussenbeschichtung auf einer Aussenfläche des Rohrs bzw. Wellrohrs und/oder als Innenbeschichtung auf einer Innenfläche des Rohrs bzw. Wellrohrs aufgebracht. Dies hat den grundsätzlichen Vorteil, dass eines besonders gut schützende Brandabschottung erzielt wird. Die als Brandschutzbeschichtung ausgestaltete Innenbeschichtung hat den weiteren Vorteil, dass bei einem Kabelbrand beispielsweise aufgrund einer mangelhaften Qualität eines Kabels eine Ausbreitung des Brands gegen aussen schnell eingedämmt werden kann.

Vorzugsweise wird die Kabelschutzführung in Form von metallischen, beschichteten Wellrohren aufgrund der leichten Aufrollbarkeit auf eine Rolle aufgerollt. Die Verwendung eines metallischen, beschichteten Wellrohrs hat hierbei den Vorteil, dass in einfacher Weise die Länge des metallischen Wellrohrs am Installationsort konfektionierbar ist. Der besondere Vorteil solcher Wellrohre liegt im Weiteren in der kantenlosen Ausführung, d.h. das Risiko der Verletzung der Kabel ist beträchtlich vermindert gegenüber von Kabelboxen. Im Weiteren lässt sich ein Wellrohr auch praktisch kantenfrei biegen, was das Risiko der Verletzung beziehungsweise Knicken der Kabel zusätzlich verringert. Der grundlegende Vorteil gegenüber den Kabelboxen liegt in der Möglichkeit des Einziehens der Kabel (d.h. nicht lediglich Einlegen), was die Handhabung grundsätzlich vereinfacht. Die Flexibilität beziehungsweise Dehnbarkeit des Wellrohrs erhöht die Stabilität gegenüber einer äusseren mechanischen Einwirkung.

Vorzugsweise ist das metallische Wellrohr der erfindungsgemässen Vorrichtung aus Stahl, Aluminium oder dergleichen gefertigt.

Ein weiterer Aspekt der vorliegenden Erfindung betrifft ein Verfahren zur Herstellung einer Vorrichtung / Kabelschutzführung nach einem der vorherigen Patentansprüche, umfassend die Verfahrensschritte:
- Bereitstellung eines zu bearbeitenden, metallischen Rohrs, insbesondere eines metallischen Wellrohrs;
- Besprühen des zu bearbeitenden, metallischen Rohrs, insbesondere des metallischen Wellrohrs, anhand einer Brandschutzbeschichtung.

Ein weiterer möglicher Verfahrensschritt zur Beschichtungvon metallischen Wellrohren kann durch ein Extrusionsverfahren erfolgen.

Ein weiterer Aspekt der vorliegenden Erfindung betrifft die Verwendung der erfindungsgemässen Vorrichtung / Kabelschutzführung zur Brandabschottung der in der Vorrichtung durchgeführten, zu schützenden Gegenstände, insbesondere Kabel.

### Kurze Beschreibung der Zeichnungen

Ein bevorzugtes Ausführungsbeispiel des Erfindungsgegenstandes wird nachstehend im Zusammenhang mit den anliegenden Zeichnungen beschrieben. Es zeigen:

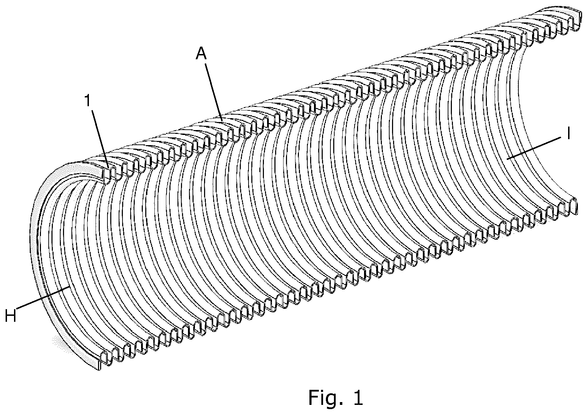

- Fig. 1: einen Längsschnitt durch eine bevorzugten Ausführungsform einer als beschichtetes, metallisches Wellrohr ausgestalteten Vorrichtung bzw. Kabelschutzführung.

### Beschreibung

**Fig. 1** zeigt einen Längsschnitt durch eine bevorzugten Ausführungsform einer als beschichtetes, metallisches Wellrohr 1 ausgestalteten Vorrichtung / Kabelschutzführung.

Das Wellrohr 1 ist auf der Innenfläche I und/oder auf der Aussenfläche A mit einer Brandschutzbeschichtung versehen. Durch den Hohlraum H der hier gezeigten Vorrichtung / Kabelschutzführung können zu schützende Gegenstände wie beispielsweise Kabel geführt werden.

Im Weiteren kann das beschichtete, metallische Wellrohr 1 an seinen Enden mit beliebigen Anschlussteilen wie beispielsweise Muffen (z.B. Steckmuffen), Flansche, Verschraubungen, Mauerdurchführungen oder anderen Fittingen versehen sein.

### Bezugszeichenliste

- 1: Wellrohr
- A: Aussenfläche (des Wellrohrs)
- H: Hohlraum (des Wellrohrs)
- I: Innenfläche (des Wellrohrs)

## Patentansprüche

1. Vorrichtung umfassend ein metallisches Rohr zur Durchführung mindestens eines Kabels zur Bildung einer Kabelschutzführung,
**dadurch gekennzeichnet, dass**
das metallische Rohr mit einer auf die Oberfläche des Rohrs angebrachten Brandschutzbeschichtung versehen ist, so dass die Brandabschottung des Rohrs verbessert wird.

2. Vorrichtung nach Patentanspruch 1,
**dadurch gekennzeichnet, dass**
das Rohr als metallisches Wellrohr (1) ausgestaltet ist.

3. Vorrichtung nach Patentanspruch 1 oder 2,
**dadurch gekennzeichnet, dass**
die Brandschutzbeschichtung als Aussenbeschichtung auf einer Aussenfläche (A) des Rohrs und/oder als Innenbeschichtung auf einer Innenfläche (I) aufgebracht ist.

4. Verfahren zur Herstellung einer Vorrichtung nach einem der vorherigen Patentansprüche, umfassend die Verfahrensschritte:
- Bereitstellung eines zu bearbeitenden, metallischen Rohrs, insbesondere eines metallischen Wellrohrs (1);
- Besprühen des zu bearbeitenden, metallischen Rohrs, insbesondere des metallischen Wellrohrs (1), anhand einer Brandschutzbeschichtung.

5. Verfahren nach Patentanspruch 4,
**dadurch gekennzeichnet, dass**
die Brandschutzbeschichtung als Aussenbeschichtung auf einer Aussenfläche (A) des Rohrs und/oder als Innenbeschichtung auf einer Innenfläche (I) aufgebracht wird.

6. Verwendung einer Vorrichtung nach einem der vorherigen Patentansprüche zur Brandabschottung der in der Vorrichtung durchgeführten, zu schützenden Gegenstände, insbesondere Kabel.
